# EUROPÄISCHE PATENTSCHRIFT

(11) **EP 1 696 138 B1**
(45) Veröffentlichungstag und Bekanntmachung des Hinweises auf die Patenterteilung: **25.07.2007**
(21) Anmeldenummer: 06010164.9
(22) Anmeldetag: 02.09.2004
(51) Int. Cl.: F16B 5/02, F16B 19/10

(54) **Toleranzausgleichsanordnung**
Tolerance compensating arrangement
Dispositif de compensation de tolérance

(30) Priorität: 09.09.2003 DE 20314003 U
(43) Veröffentlichungstag der Anmeldung: 30.08.2006
(62) Teilanmeldung aus: 04020920.7
(73) Patentinhaber: Böllhoff Verbindungstechnik GmbH, 33649 Bielefeld (DE)
(72) Erfinder: Grubert, Klaus Friedrich, 31675 Bückeburg (DE); Kirchhecker, Uwe, 33605 Bielefeld (DE); Kassing, Frank, 32647 Bielefeld (DE)
(74) Vertreter: Hauck Patent- und Rechtsanwälte

(56) Entgegenhaltungen:
- DE-A- 10 151 383
- DE-A1- 19 859 699
- DE-U- 20 119 112
- US-A- 3 858 479
- US-A- 4 043 239
- US-B1- 6 357 953

## Beschreibung

Die vorliegende Erfindung betrifft eine Toleranzausgleichsanordnung zum selbsttätigen Ausgleich fertigungs- und/oder montagebedingter Toleranzen im Abstand zwischen einem ersten Bauteil und einem zweiten Bauteil.

Es sind bereits zahlreiche Toleranzausgleichsanordnungen zum Ausgleich derartiger Toleranzen in der Vor- bzw. Endmontage von Baugruppen bekannt. Insbesondere sind bereits Toleranzausgleichsanordnungen bekannt, bei denen der Toleranzausgleich ohne Einfluss des Monteurs, also selbsttätig erfolgt, um die Montagezeit so kurz wie möglich zu halten. Verwiesen sei in diesem Zusammenhang beispielsweise auf die DE 100 04 687 A1, EP 0 176 663 A1 und EP 0 848 168 A1. Alle diese Toleranzausgleichsanordnungen erfordern jedoch vergleichsweise viele Einzelteile, was einen entsprechenden Fertigungsaufwand und damit relativ hohe Herstellungskosten bedingt.

Die DE 101 51 383 A1 der Anmelderin offenbart eine Toleranzausgleichsanordnung zum selbsttätigen Ausgleich fertigungs- und/oder montagebedingter Toleranzen im Abstand zwischen einem ersten Bauteil und einem zweiten Bauteil, mit einer Befestigungsschraube, einem am ersten Bauteil vorgesehenen Basiselement mit einer Gewindebohrung, die ein Verstellgewinde und ein Befestigungsgewinde unterschiedlichen Durchmessers aufweist, und einer Verstellbuchse mit einer Durchgangsbohrung und einem am Außenumfang vorgesehenen Gewinde, wobei das Verstellgewinde des Basiselementes und das Gewinde der Verstellbuchse eine Gewindepaarung einer bestimmten Gangrichtung zum Verstellen der Verstellbuchse zwecks Toleranzausgleich bildet und das Befestigungsgewinde des Basiselementes und das Gewinde der Befestigungsschraube eine Gewindepaarung der entgegengesetzten Gangrichtung zum Festziehen der Toleranzausgleichsanordnung bilden, und die Verstellbuchse einen Mitschleppabschnitt hat, der mit der Befestigungsschraube eine Reibschlussverbindung bildet, welche, wenn die durch die Verstellbuchse hindurchgesteckte Befestigungsschraube gedreht wird, die Verstellbuchse mitdreht und welche, wenn sich die Verstellbuchse nach dem Toleranzausgleich an das zweite Bauteil angelegt hat und die Befestigungsschraube weiter gedreht wird, sich löst, um die Befestigungsschraube mit dem Befestigungsgewinde des Basiselementes verspannen zu können.

Bei dieser Toleranzausgleichsanordnung besteht der Mitschleppabschnitt der Verstellbuchse aus einem Klemmabschnitt in Form federnder Finger, die durch axiale Schlitze in der Verstellbuchse gebildet sind. Das Basiselement besteht aus einer Blindnietmutter, die mittels eines Nietwulstes an dem zugehörigen Bauteil so festgelegt ist, dass sowohl das Verstellgewinde wie auch das Befestigungsgewinde auf der von dem Bauteil axial abgewandten Seite des Nietwulstes liegen.

Bei einer etwas anderen vorbekannten Toleranzausgleichsanordnung (US-B1-6 357 953) besteht der Mitschleppabschnitt aus einem Kunststoffring, der mit der Befestigungsschraube haftend verbunden ist. Das Basiselement besteht aus einer Mutter, bei der sowohl das Verstellgewinde wie auch das Befestigungsgewinde auf der von dem zugehörigen Bauteil axial abgewandten Seite liegen.

Die vorbekannten Toleranzausgleichsanordnungen zeichnen sich durch konstruktive Einfachheit und geringen Montageaufwand aus, da sie aus nur relativ einfachen Teilen bestehen. Dennoch sind verschiedene Verbesserungen dieser Toleranzausgleichsanordnungen möglich und wünschenswert.

Durch die vorliegende Erfindung sollen die vorbekannten Toleranzausgleichsanordnungen hinsichtslich ihrer Eigenschaften, Funktionsweise und Handhabung verbessert werden, ohne dass ihre Einfachheit aufgegeben wird.

Mehrere Lösungen dieser Aufgabe gemäß der Erfindung sind in den Patentansprüchen 1, 4, 5 definiert.

Gemäß einer Lösung der Erfindung ist das Basiselement als Blindnietmutter ausgebildet, die mittels eines Nietwulstes am ersten Bauteil festgelegt ist und deren Befestigungsgewinde auf einer Seite des Nietwulstes und deren Verstellgewinde auf der axial gegenüberliegenden Seite des Nietwulstes angeordnet ist. Die Folge ist, dass die zum Festlegen der Toleranzausgleichsanordnung dienende Verspannkraft, die von der Befestigungsschraube über das Befestigungsgewinde auf das Basiselement übertragen wird, vom Basiselement unmittelbar über den Nietwulst an das erste Bauteil weitergeleitet wird. Hierdurch wird der möglicherweise noch unvollständige Nietsetzvorgang, bei dem der Nietwulst ausgebildet wird, mit Sicherheit zu Ende geführt.

Gemäß einer weiteren Lösung der Erfindung wird das Basiselement von dem ersten Bauteil selbst gebildet, in das das Verstellgewinde und das Befestigungsgewinde unmittelbar eingearbeitet sind. Ein gesondertes Basiselement ist dann nicht mehr erforderlich.

Eine andere Möglichkeit besteht darin, das Basiselement als buchsenförmigen Einsatz auszubilden, der in das erste Bauteil eingesetzt ist. Gemäß einer Ausführungsform ist vorgesehen, dass der buchsenförmige Einsatz als Gewindeeinsatz ausgebildet wird, der in das erste Bauteil eingeschraubt wird. Gemäß einer anderen Ausführungsform hat der buchsenförmige Einsatz eine profilierte Außenkontur zum Einbetten in das aus Kunststoff bestehende erste Bauteil.

Weitere vorteilhafte Ausgestaltungen und Weiterbildungen der Erfindung gehen aus den Unteransprüchen hervor.

Anhand der Zeichnung werden Ausführungsbeispiele der Erfindung näher erläutert. Es zeigt:
Fig. 1 eine perspektivische Ansicht einer Befestigungsschraube;
Fig. 2 eine perspektivische, aufgeschnittene Ansicht einer Verstellbuchse;
Fig. 3 eine perspektivische, aufgeschnittene Ansicht eines als Blindnietmutter ausgebildeten Basiselementes mit erstem Bauteil;
Fig. 4 eine vergrößerte Schnittdarstellung der Verstellbuchse in Fig. 2;
Fig. 5 bis 9 der Fig. 3 entsprechende Darstellungen verschiedener Ausführungsformen des Basiselementes gemäß der Erfindung.

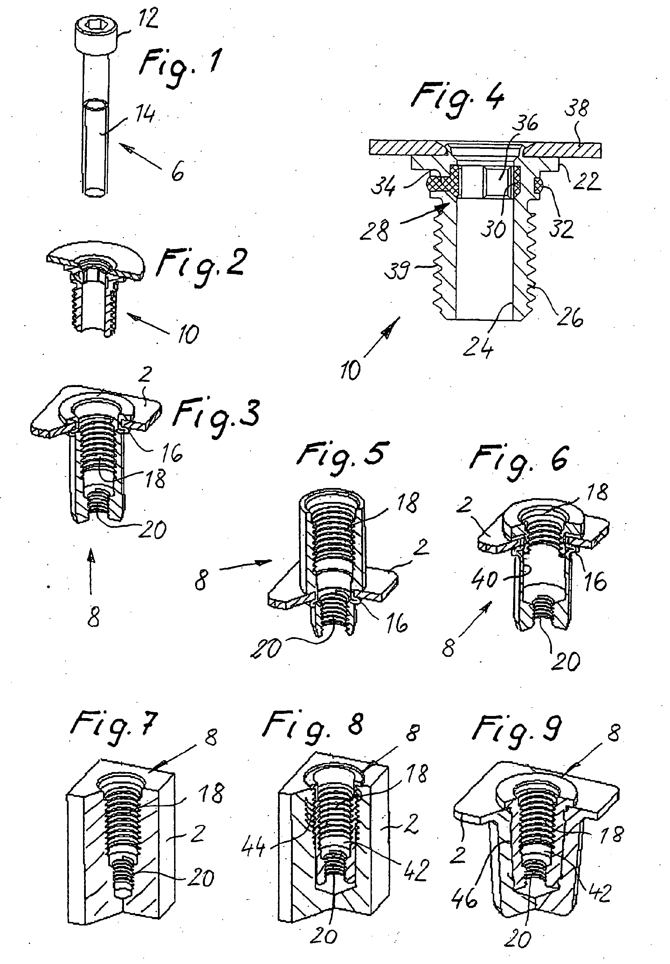

Die Ausführungsform der Figuren 1-4 gehört nicht zur Erfindung.

Die in der Zeichnung dargestellte Toleranzausgleichsanordnung besteht im Prinzip aus drei Teilen, und zwar einer Befestigungsschraube 6 (Fig. 1), einem Basiselement 8 (Fig. 3) und einer Verstellbuchse 10 (Fig. 2). Der grundsätzliche Aufbau der dargestellten Toleranzausgleichsanordnung entspricht weitgehend dem der Fig. 1 bis 4 in der oben erwähnten DE 101 51 383 A1, so dass diesbezüglich eine kurze Zusammenfassung genügt.

Die Toleranzausgleichsanordnung dient zum Verspannen eines plattenförmigen ersten Bauteils 2 (Fig. 3) und eines plattenförmigen zweiten Bauteils (nicht dargestellt) und gleichzeitigen Toleranzausgleich im Abstand zwischen den beiden vormontierten Bauteilen, welcher aufgrund fertigungsbedingter Bauteiltoleranzen und/oder montagebedingter Toleranzen in der Vor- bzw. Endmontage Schwankungen unterliegt.

Die Befestigungsschraube 6 ist eine übliche Schraube, z. B. eine genormte Schraube, mit einem Kopf 12 und einem Gewinde 14.

Das Basiselement 8 in Fig. 3 ist eine Blindnietmutter, die durch einen Nietwulst 16 am Bauteil 2 festgelegt ist. Das Basiselement 8 hat ein Verstellgewinde 18 und ein axial dazu versetztes Befestigungsgewinde 20.

Die Verstellbuchse 10 (Fig. 2 und 4) hat einen Buchsenkörper mit einem an einem Ende vorgesehenen Flansch 22, einer Durchgangsbohrung 24 und einem am Außenumfang vorgesehenen Gewinde 26.

Das Gewinde 26 der Verstellbuchse 28 bildet mit dem Verstellgewinde 18 des Basiselementes 8 eine (z. B. linksgängige) Gewindepaarung, während das Befestigungsgewinde 20 der Verstellbuchse 8 mit dem Gewinde 14 der Befestigungsschraube 6 eine entgegengerichtete (z. B. rechtsgängige) Gewindepaarung bildet.

Die Verstellbuchse 10 ist ferner mit einem Mitschleppabschnitt 28 versehen, der mit dem Gewinde 14 der Befestigungsschraube 6 eine Reibschlussverbindung bilden kann, wenn die Befestigungsschraube 6 in die Verstellbuchse 10 eingesteckt wird. Der Mitschleppabschnitt 28 ist so ausgebildet, dass sich die Befestigungsschraube 6 relativ zur Verstellbuchse 28 drehen kann, wenn der Reibschluss überwunden wird.

Die insoweit beschriebene Toleranzausgleichsanordnung entspricht in ihrem grundsätzlichen Aufbau, wie bereits erwähnt, der Toleranzausgleichsanordnung in den Fig. 1 bis 4 der DE 101 51 383 A1. Unterschiedlich gegenüber diesem Stand der Technik ist jedoch die konstruktive Ausgestaltung der Verstellbuchse 10, wie sie insbesondere aus Fig. 4 hervorgeht.

Wie dargestellt, besteht der Mitschleppabschnitt 28 aus einem ringförmigen Kunststoffabschnitt 30, der in einer entsprechenden Ringnut des Buchsenkörpers der Verstellbuchse 10 sitzt. Der ringförmige Kunststoffabschnitt 30 steht über die Wand der Durchgangsbohrung 24 radial nach innen soweit vor, dass er die gewünschte Mitschleppfunktion ausüben kann, wie noch genauer erläutert wird.

Die Verstellbuchse 10 ist ferner mit einem äußeren ringförmigen Kunststoffabschnitt 32 versehen, der über den Außenumfang des Gewindes 26 radial etwas vorsteht, wie ebenfalls noch genauer erläutert wird. Der innere ringförmige Kunststoffabschnitt 30 und der äußere ringförmige Kunststoffabschnitt 32 sind durch Kunststoffzwischenstege 34 verbunden, die durch radiale Bohrungen im Buchsenkörper der Verstellbuchse 28 verlaufen. Diese Verbindung der beiden ringförmigen Kunststoffabschnitte 30, 32 erlaubt es, den gesamten Kunststoff durch einen einzigen Spritzgießvorgang in die z. B. aus Stahl bestehende Verstellbuchse 10 einzubringen.

Wie sich Fig. 4 entnehmen lässt, ist der Innenumfang 36 des ringförmigen Kunststoffabschnittes 30 als Mehrkantfläche ausgebildet, die als Angriffsfläche für ein entsprechend gestaltetes, manuell zu betätigendes Werkzeug (nicht gezeigt) dienen. Die Verstellbuchse 10 kann somit auch manuell verstellt werden, was ebenfalls noch genauer erläutert wird.

An dem Flansch 22 der Verstellbuchse 10 ist ferner eine Scheibe 38 durch einen Niet- oder Bördelvorgang so angebracht, dass die Scheibe 38 relativ zu dem übrigen Teil der Verstellbuchse 10 drehbar ist. Bei Anlage der Verstellbuchse 10 an dem zweiten Bauteil (nicht gezeigt) kann daher die Verstellbuchse 10 gedreht werden, während die Scheibe 38 an dem zweiten Bauteil fest anliegt, so dass die Gefahr eines Zerkratzens oder einer anderen Beschädigung des zweiten Bauteils vermieden ist.

Die Funktionsweise der beschriebenen Toleranzausgleichsanordnung ist wie folgt:

Zunächst wird das als Blindnietmutter ausgebildete Basiselement 8 mit dem ersten Bauteil 2 durch einen Nietvorgang (Nietwulst 14) fest verbunden. Die Verstellbuchse 10 wird dann in das Basiselement 8 eingeschraubt, bis ihr äußerer ringförmiger Kunststoffabschnitt 32 in Anlage mit dem Basiselement 8 gelangt. Vor Erreichen der maximalen Einschraubtiefe steigt dann das Reibmoment zwischen dem äußeren Umfang des Kunststoffabschnittes 32 der Verstellbuchse 10 und Verstellgewinde 18 des Basiselementes 8 so an, dass es größer wird als das Antriebsmoment des Einschraubwerkzeuges. Hierdurch wird der Einschraubvorgang beendet, ehe eine Verkonterung zwischen der Verstellbuchse 10 und dem Basiselement 8 eintreten kann. Gleichzeitig dient der äußere ringförmige Kunststoffabschnitt 32 als Transportsicherung, so das das Bauteil 2 mit dem daran befestigten Basiselement 8 und der eingeschraubten Verstellbuchse 10 als Einheit gehandhabt werden können, ohne dass die Gefahr besteht, dass sich die Verstellbuchse 10 löst.

Statt der oben beschriebenen reibschlüssigen (kraftschlüssigen) Verkonterungssicherung zwischen Verstellbuchse 10 und Basiselement 8 kann auch eine formschlüssige Verkonterungssicherung im Form von Anschlägen oder Vergleichen vorgesehen werden, die mit einer kraftschlüssigen Verliersicherung kombiniert werden kann.

Wenn das erste Bauteil 2 und das zweite Bauteil (nicht gezeigt) mit gegenseitigem Abstand vormontiert sind, wird die Befestigungsschraube 6 durch zueinander ausgerichtete Löcher der beiden Bauteile in die Durchgangsbohrung 24 der Verstellbuchse 10 gesteckt, bis das Gewinde 14 der Befestigungsschraube 6 mit dem inneren ringförmigen Kunststoffabschnitt 30 der Verstellbuchse 10 in Eingriff gelangt. Wird die Befestigungsschraube 6 mittels eines Schraubenschlüssels (nicht gezeigt) gedreht, so wird die Verstellbuchse 10 durch den Reibschluss zwischen dem Kunststoffabschnitt 30 und dem Gewinde 14 der Befestigungsschraube 6 mitgedreht. Da das Gewinde 26 der Verstellbuchse 10 und das Verstellgewinde 18 des Basiselementes 8 als linksgängige Gewindepaarung (also gegensinnig zum rechtsgängigen Gewinde der Befestigungsschraube 6) ausgebildet sind, wird die Verstellbuchse 10 von der Befestigungsschraube 6 entgegen der Einsteckrichtung aus dem Basiselement 8 herausgedreht, bis sich die Verstellbuchse 10 mit der Scheibe 38 an der Unterseite des zweiten Bauteils (nicht gezeigt) anlegt, wodurch der Toleranzausgleich erfolgt ist.

Da nun die Verstellbuchse 10 aufgrund ihrer Anlage am zweiten Bauteil axial nicht mehr verstellt werden kann, lässt sie sich von der Befestigungsschraube 6 nicht mehr weiterdrehen. Die Befestigungsschraube 6 kann daher unter Überwindung des Reibschlusses zwischen dem Kunststoffabschnitt 30 der Verstellbuchse 10 und dem Gewinde 14 der Befestigungsschraube 6 mit dem Befestigungsgewinde 20 des Basiselementes 8 in Eingriff gebracht und verschraubt werden. Sobald sich der Kopf 12 der Befestigungsschraube 6 am zweiten Bauteil abstützt, kann die Befestigungsschraube 6 mit dem notwendigen Anziehmoment angezogen werden, wodurch die beiden Bauteile im vorgegebenen Abstand miteinander verspannt werden.

Wie bereits erwähnt, ist der innere ringförmige Kunststoffabschnitt 3 0 der Verstellbuchse 10 an seinem Innenumfang als Mehrkantfläche 36 ausgebildet. Statt des beschriebenen automatischen Toleranzausgleiches kann daher die Verstellbuchse 10 mittels eines an der Mehrkantfläche 36 angreifenden Schraubenschlüssels manuell verstellt werden. Um die Verstellbuchse 10 in diesem Fall gegen unbeabsichtigtes Verdrehen zu sichern, wird das Gewinde 26 der Verstellbuchse 10 zweckmäßigerweise mit einer chemischen oder mechanischen Gewindesicherung 39 versehen. Die chemische Gewindesicherung besteht beispielsweise aus einem mikrogekapselten Kleber, einem aufgeschmolzenen Kunststoffelement, Polyamidflecken oder dergleichen. Da derartige Gewindesicherungen hinlänglich bekannt sind, wird hierauf nicht näher eingegangen.

Die konstruktive Einfachheit der beschriebenen Toleranzausgleichsanordnung erlaubt es, die Befestigungsschraube 6 und die Verstellbuchse 10 mit unterschiedlichsten Ausführungsformen des Basiselementes 8 zu paaren, was der Toleranzausgleichsanordnung eine Art Modulcharakter verleiht. Die Fig. 5 bis 9 zeigen unterschiedliche Ausführungsformen des Basiselementes 8, die jeweils anstelle des Basiselementes 8 in Fig. 3 verwendet werden können.

Bei der in Fig. 3 dargestellten Ausfiihrungsform des Basiselementes 8 sind das Verstellgewinde 18 und das Befestigungsgewinde 20 beide auf der von dem Bauteil 2 axial abgewandten Seite des Nietwulstes (also unterhalb des Bauteils 2) angeordnet. Im Gegensatz hierzu sind bei der Ausführungsform der Fig. 5 das Verstellgewinde 18 und das Befestigungsgewinde 20 auf axial gegenüberliegenden Seiten des Nietwulstes 16 angeordnet; d. h., dass sich das Verstellgewinde 18 oberhalb des Bauteils 2 befindet. Diese Ausgestaltung des Basiselementes 8 hat den Vorteil, dass beim Festziehen der Befestigungsschraube 6 die Anzugskraft über die Gewindepaarung 14, 20 unmittelbar auf den Nietwulst 16 und von da auf das Bauteil 2 übertragen wird. Falls daher beim Setzen des Nietwulstes 16 dieser nicht vollständig ausgeformt wurde, wird der Setzvorgang durch das Verspannen der Toleranzausgleichsanordnung mittels der Befestigungsschraube 6 zu Ende geführt.

Da bei der Ausführungsform der Fig. 5 das oberhalb des Bauteils 2 liegende Verstellgewinde 16 ungefähr die gleiche axiale Länge wie das Gewinde 26 der Verstellbuchse 10 hat, ergibt sich eine relativ große Aufbauhöhe des Basiselementes 8 oberhalb des Bauteils 2. Wenn der Abstand zwischen dem ersten Bauteil 2 und dem zweiten Bauteil (nicht gezeigt) nicht groß genug ist, um diese Aufbauhöhe aufzunehmen, kann das Basiselement wie in Fig. 6 ausgebildet werden.

Bei dem Ausführungsbeispiel der Fig. 6, bei dem das Basiselement 8 wieder als Blindnietmutter ausgebildet ist, ist das Verstellgewinde 18 dem Nietwulst 16 so zugeordnet, dass es zwar oberhalb des Nietwulstes 16 liegt, sich jedoch durch die Ebene des plattenförmigen Bauteils 2 erstreckt. Außerdem hat das Verstellgewinde 18 eine kleinere axiale Länge als bei den Ausfiihrungsbeispielen der Fig. 3 und 5. Damit nun die Verstellbuchse 10 ausreichend weit in das Basiselement 8 hineingeschraubt werden kann, ist das Basiselement 8 unterhalb des Verstellgewindes 18 mit einem Hinterschnitt 40 versehen, der das Gewinde 26 der Verstellbuchse 10 aufnehmen kann. Aufgrund dieser Ausgestaltung hat das Basiselement eine sehr viel kleinere Aufbauhöhe oberhalb des Bauteils 2 als das Basiselement 8 der Fig. 5, wobei jedoch der Vorteil erhalten bleibt, dass das Verstellgewinde 18 auf der vom Befestigungsgewinde 20 abgewandten Seite des Nietwulstes 16 liegt. Die Anzugskraft beim Festziehen der Befestigungsschraube 6 wird daher auch bei dieser Ausführungsform unmittelbar über den Nietwulst 16 auf das Bauteil 2 übertragen.

Bei dem in Fig. 7 dargestellten Ausführungsbeispiel ist kein getrenntes Basisteil vorgesehen. Vielmehr wird das Basisteil 8 von dem Bauteil 2 selbst gebildet. Anders ausgedrückt, sind das Verstellgewinde 18 und das Befestigungsgewinde 20 unmittelbar in das Bauteil 8 eingearbeitet, das beispielsweise aus einem Aluminiumblock besteht.

Eine weitere Möglichkeit besteht darin, das Basisteil 8 als buchsenförmigen Einsatz zum Einsetzen in das blockförmig ausgebildete Bauteil 2 auszubilden, wie dies die Fig. 8 und 9 zeigen.

Bei der Ausführungsform der Fig. 8 ist der Einsatz 42 als Gewindeeinsatz ausgebildet, der mit seinem Außengewinde 44 in das Bauteil eingeschraubt ist. Hierzu kann das Bauteil 2 mit einer entsprechenden vorgefertigten Gewindebohrung versehen sein. Stattdessen kann jedoch das Gewinde 44 des buchsenförmigen Einsatzes 42 auch als selbstschneidendes, selbstfurchendes Gewinde ausgebildet werden, mit dem das Basiselement 8 in ein aus Holz, Kunststoff oder Metall bestehendes Bauteil 2 oder ein mit einem Dübelsystem versehenes Bauteil eingeschraubt werden kann.

Bei dem Ausführungsbeispiel der Fig. 9 hat der Einsatz 42 mit dem Verstellgewinde 18 und dem Befestigungsgewinde 20 eine profilierte, beispielsweise abgestufte Außenkontur 46, durch die er im Bauteil 2 verankert wird. Beispielsweise kann der Einsatz 42 in das aus Kunststoff bestehende Bauteil 2 durch Aufschmelzen oder dergleichen eingebettet werden.

Da sowohl Gewindeeinsätze entsprechend Fig. 8 und eingebettete Einsätze gemäß Fig. 9 in großer Vielfalt bekannt sind, ist eine weitere Erläuterung nicht erforderlich.

Bei dem anhand der Fig. 4 beschriebenen Ausführungsbeispiel wird die Mitschleppfunktion zwischen der Befestigungsschraube 6 und der Verstellbuchse 10 durch den inneren ringförmigen Kunststoffabschnitt 30 des Mitschleppabschnittes 28 erzielt. Eine andere Möglichkeit besteht darin, die Befestigungsschraube 6 im Bereich ihres Gewindes 4 mit einer Kunststoffbeschichtung zu versehen, die dann mit der Wand der Durchgangsbohrung 24 der Verstellbuchse 10 eine Reibschlussverbindung bildet, durch die die Verstellbuchse 10 beim Einschrauben der Befestigungsschraube 6 mitgedreht wird. Die Kunststoffbeschichtung kann auf dem gesamten Gewinde 14 oder auch nur auf einem Teil des Gewindes 14 der Befestigungsschraube 6 vorgesehen werden. Ferner kann die Kunststoffbeschichtung auf dem Gewinde 14 der Befestigungsschraube 6 so angeordnet werden, dass sie gleichzeitig als Schraubenverliersicherung im Befestigungsgewinde 20 des Basiselementes 8 dient.

## Patentansprüche

1. Toleranzausgleichsanordnung zum selbsttätigen Ausgleich fertigungs- und/oder montagebedingter Toleranzen im Abstand zwischen einem ersten Bauteil (2) und einem zweiten Bauteil, mit
einer Befestigungsschraube (6),
einem am ersten Bauteil (2) vorgesehenen Basiselement (8) mit einer Gewindebohrung, die ein Verstellgewinde (18) und ein Befestigungsgewinde (20) unterschiedlichen Durchmessers aufweist, und
einer Verstellbuchse (10) mit einer Durchgangsbohrung (24) und einem am Außenumfang vorgesehenen Gewinde (26),
wobei das Verstellgewinde (18) des Basiselementes (8) und das Gewinde (26) der Verstellbuchse (10) eine Gewindepaarung einer bestimmten Gangrichtung zum Verstellen der Verstellbuchse zwecks Toleranzausgleich bildet und das Befestigungsgewinde (20) des Basiselementes (8) und das Gewinde (14) der Befestigungsschraube (6) eine Gewindepaarung der entgegengesetzten Gangrichtung zum Festziehen der Toleranzausgleichsanordnung bilden,
die Verstellbuchse (10) einen Mitschleppabschnitt (28) hat, der mit der Befestigungsschraube (6) eine Reibschlussverbindung bildet, welche, wenn die durch die Verstellbuchse (10) hindurch gesteckte Schraube (6) gedreht wird, die Verstellbuchse (10) mitdreht und welche, wenn sich die Verstellbuchse (10) nach dem Toleranzausgleich an das zweite Bauteil angelegt hat und die Befestigungsschraube weiter gedreht wird, sich löst, um die Befestigungsschraube (6) mit dem Befestigungsgewinde (20) des Basiselementes (8) verspannen zu können, **dadurch gekennzeichnet dass**
das Basiselement (8) als Blindnietmutter ausgebildet ist, die mittels eines Nietwulstes (16) an dem ersten Bauteil (2) festgelegt ist und deren Befestigungsgewinde (20) auf einer Seite des Nietwulstes (16) und deren Verstellgewinde (18) auf der axial gegenüberliegenden Seite des Nietwulstes (16) angeordnet ist.

2. Toleranzausgleichsanordnung nach Anspruch 1, **dadurch gekennzeichnet, dass** das Verstellgewinde (18) des Basiselementes (8) insgesamt auf der dem Nietwulst (16) axial abgewandten Seite des ersten Bauteils (2) angeordnet ist.

3. Toleranzausgleichsanordnung nach Anspruch 1, **dadurch gekennzeichnet, dass** das Verstellgewinde (18) des Basiselementes (8) zumindest teilweise durch die Ebene des ersten Bauteils (2) verläuft und das Basiselement (8) im Bereich zwischen dem Verstellgewinde (18) und dem Befestigungsgewinde (20) einen Hinterschnitt (40) zur Aufnahme eines überstehenden Teils des Gewindes (26) der in das Basiselement (8) eingeschraubten Verstellbuchse (10) hat.

4. Toleranzausgleichsanordnung zum selbsttätigen Ausgleich fertigungs- und/oder montagebedingter Toleranzen im Abstand zwischen einem ersten Bauteil (2) und einem zweiten Bauteil, mit
einer Befestigungsschraube (6),
einem am ersten Bauteil (2) vorgesehenen Basiselement (8) mit einer Gewindebohrung, die ein Verstellgewinde (18) und ein Befestigungsgewinde (20) unterschiedlichen Durchmessers aufweist, und
einer Verstellbuchse (10) mit einer Durchgangsbohrung (24) und einem am Außenumfang vorgesehenen Gewinde (26),
wobei das Verstellgewinde (18) des Basiselementes (8) und das Gewinde (26) der Verstellbuchse (10) eine Gewindepaarung einer bestimmten Gangrichtung zum Verstellen der Verstellbuchse zwecks Toleranzausgleich bildet und das Befestigungsgewinde (20) des Basiselementes (8) und das Gewinde (14) der Befestigungsschraube (6) eine Gewindepaarung der entgegengesetzten Gangrichtung zum Festziehen der Toleranzausgleichsanordnung bilden,
die Verstellbuchse (10) einen Mitschleppabschnitt (28) hat, der mit der Befestigungsschraube (6) eine Reibschlussverbindung bildet, welche, wenn die durch die Verstellbuchse (10) hindurchgesteckte Befestigungsschraube (6) gedreht wird, die Verstellbuchse (10) mitdreht und welche, wenn sich die Verstellbuchse (10) nach dem Toleranzausgleich an das zweite Bauteil angelegt hat und die Befestigungsschraube weiter gedreht wird, sich löst, um die Befestigungsschraube (6) mit dem Befestigungsgewinde (20) des Basiselementes (8) verspannen zu können, **dadurch gekennzeichnet dass**
das Basiselement (8) von dem ersten Bauteil (2) selbst gebildet wird, in das das Verstellgewinde (18) und das Befestigungsgewinde (20) unmittelbar eingearbeitet sind.

5. Toleranzausgleichsanordnung zum selbsttätigen Ausgleich fertigungs- und/oder montagebedingter Toleranzen im Abstand zwischen einem ersten Bauteil (2) und einem zweiten Bauteil, mit
einer Befestigungsschraube (6),
einem am ersten Bauteil (2) vorgesehenen Basiselement (8) mit einer Gewindebohrung, die ein Verstellgewinde (18) und ein Befestigungsgewinde (20) unterschiedlichen Durchmessers aufweist, und
einer Verstellbuchse (10) mit einer Durchgangsbohrung (24) und einem am Außenumfang vorgesehenen Gewinde (26),
wobei das Verstellgewinde (18) des Basiselementes (8) und das Gewinde (26) der Verstellbuchse (10) eine Gewindepaarung einer bestimmten Gangrichtung zum Verstellen der Verstellbuchse zwecks Toleranzausgleich bildet und das Befestigungsgewinde (20) des Basiselementes (8) und das Gewinde (14) der Befestigungsschraube (6) eine Gewindepaarung der entgegengesetzten Gangrichtung zum Festziehen der Toleranzausgleichsanordnung bilden,
die Verstellbuchse (10) einen Mitschleppabschnitt (28) hat, der mit der Befestigungsschraube (6) eine Reibschlussverbindung bildet, welche, wenn die durch die Verstellbuchse (10) hindurchgesteckte Befestigungsschraube (6) gedreht wird, die Verstellbuchse (10) mitdreht und welche, wenn sich die Verstellbuchse (10) nach dem Toleranzausgleich an das zweite Bauteil angelegt hat und die Befestigungsschraube weiter gedreht wird, sich löst, um die Befestigungsschraube (6) mit dem Befestigungsgewinde (20) des Basiselementes (8) verspannen zu können, **dadurch gekennzeichnet dass**
das Basiselement (8) aus einem buchsenförmigen Einsatz (42) besteht, der in das erste Bauteil (2) eingesetzt ist.

6. Toleranzausgleichsanordnung nach Anspruch 5, **dadurch gekennzeichnet, dass** der buchsenförmige Einsatz (42) ein Außengewinde (44) für einen Gewindeeingriff mit dem ersten Bauteil (2) hat.

7. Toleranzausgleichsanordnung nach Anspruch 5, **dadurch gekennzeichnet, dass** der buchsenförmige Einsatz (42) eine profilierte Außenkontur (46) zum Einbetten in das aus Kunststoff bestehende erste Bauteil (2) hat.

## Claims

1. Tolerance compensating arrangement for the automatic compensation of production- and/or assembly-dependent tolerances in the space between a first component (2) and a second component, with
a fastening screw (6),
a base element (8) provided on the first component (2) with a threaded hole, which has an adjustment thread (18) and a fastening thread (20) with different diameters, and
an adjustment bushing (10) with a through hole (24) and a thread (26) provided on the outer perimeter,
wherein the adjustment thread (18) of the base element (8) and the thread (26) of the adjustment bushing (10) form a thread pairing of a certain movement direction for adjusting the adjustment bushing for the purpose of tolerance compensation and the fastening thread (20) of the base element (8) and the thread (14) of the fastening screw (6) form a thread pairing of the opposite movement direction for tightening the tolerance compensating arrangement,
the adjustment bushing (10) has a drag section (28), which forms a friction connection with the fastening screw (6), which also turns the adjustment bushing (10) when the fastening screw (6) inserted through the adjustment bushing (10) is turned and which is released when the adjustment bushing (10) has been attached to the second component after the tolerance compensation and the fastening screw is turned further in order to be able to join the fastening screw (6) with the fastening thread (20) of the base element (8), **characterized in that**
the base element (8) is designed as a blind-rivet nut, which is fastened on the first component (2) by means of a rivet bulge (16) and the fastening thread (20) of which is arranged on one side of the rivet bulge (16) and the adjustment thread (18) of which is arranged on the axially opposite side of the rivet bulge (16).

2. Tolerance compensating arrangement according to claim 1, **characterized in that** the adjustment thread (18) of the base element (8) is arranged overall on the side of the first component (2) facing axially away from the rivet bulge (16).

3. Tolerance compensating arrangement according to claim 1, **characterized in that** the adjustment thread (18) of the base element (8) runs at least partially through the plane of the first component (2) and the base element (8) in the area between the adjustment thread (18) and the fastening thread (20) has an undercut (40) for accommodating a projecting part of the thread (26) of the adjustment bushing (10) screwed into the base element (8).

4. Tolerance compensating arrangement for the automatic compensation of production- and/or assembly-dependent tolerances in the space between a first component (2) and a second component, with
a fastening screw (6),
a base element (8) provided on the first component (2) with a threaded hole, which has an adjustment thread (18) and a fastening thread (20) with difference diameters and
an adjustment bushing (10) with a through hole (24) and a thread (26) provided on the outer perimeter,
wherein the adjustment thread (18) of the base element (8) and the thread (26) of the adjustment bushing (10) form a thread pairing of a certain movement direction for adjusting the adjustment bushing for the purpose of tolerance compensation and the fastening thread (20) of the base element (8) and the thread (14) of the fastening screw (6) form a thread pairing of the opposite movement direction for tightening the tolerance compensating arrangement,
the adjustment bushing (10) has a drag section (28) which forms a friction connection with the fastening screw (6), which also turns the adjustment bushing (10) when the fastening screw (6) inserted through the adjustment bushing (10) is turned and which is released when the adjustment bushing (10) has been attached to the second component after the tolerance compensation and the fastening screw is turned further in order to be able to join the fastening screw (6) with the fastening thread (20) of the base element (8), **characterized in that**
the base element (8) is formed by the first component (2) itself, **in that** the adjustment thread (18) and the fastening thread (20) are directly incorporated.

5. Tolerance compensating arrangement for the automatic compensation of production- and/or assemble-dependent tolerances in the space between a first component (2) and a second component, with
a fastening screw (6),
a base element (8) provided on the first component (2) with a threaded hole, which has an adjustment thread (18) and a fastening thread (20) with different diameters, and
an adjustment bushing (10) with a through hole (24) and a thread (26) provided on the outer perimeter,
wherein the adjustment thread (18) of the base element (8) and the thread (26) of the adjustment bushing (10) form a thread pairing of a certain movement direction for adjusting the adjustment bushing for the purpose of tolerance compensation and the fastening thread (20) of the base element (8) and the thread (14) of the fastening screw (6) form a thread pairing of the opposite movement direction for tightening the tolerance compensating arrangement,
the adjustment bushing (10) has a drag section (28) which forms a friction connection with the fastening screw (6), which also turns the adjustment bushing (10) when the fastening screw (6) inserted through the adjustment bushing (10) is turned and which is released when the adjustment bushing (10) has been attached to the second component after the tolerance compensation and the fastening screw is turned further in order to be able to join the fastening screw (6) with the fastening thread (20) of the base element (8), **characterized in that**
the base element (8) is comprised of a bushing-shaped insert (42), which is inserted into the first component (2).

6. Tolerance compensating arrangement according to claim 5, **characterized in that** the bushing-shaped insert (42) has an external thread (44) for a thread contact with the first component (2).

7. Tolerance compensating arrangement according to claim 5, **characterized in that** the bushing-shaped insert (42) has a profiled outer contour (46) for embedding into the first component (2) made of plastic.

## Revendications

1. Dispositif de compensation de tolérance pour la compensation automatique de tolérances, dues à la fabrication et/ou au montage, de la distance entre un premier composant (2) et un deuxième composant, avec
une vis de fixation (6),
un élément de base (8) prévu sur le premier composant (2), avec un alésage fileté qui présente un filet de réglage (18) et un filet de fixation (20) de diamètres différents, et
une douille de réglage (10) avec un alésage débouchant (24) et un filet (26) prévu sur la circonférence extérieure,
le filet de réglage (18) de l'élément de base (8) et le filet (26) de la douille de réglage (10) formant un appariement fileté d'un sens de filet défini pour le réglage de la douille de réglage en vue de la compensation de tolérance, et le filet de fixation (20) de l'élément de base (8) et le filet (14) de la vis de fixation (6) formant un appariement de sens de filet opposé pour le serrage du dispositif de compensation de tolérance,
la douille de réglage (10) ayant un segment d'entraînement (28) qui forme avec la vis de fixation (6) un raccordement par friction qui, quand la vis (6) introduite à travers la douille de réglage (10) est mise en rotation, fait tourner solidairement la douille de réglage (10) et qui, quand la douille de réglage (10), après la compensation de tolérance, s'est appuyée contre le deuxième composant et quand la vis de fixation continue à être tournée, se desserre pour pouvoir bloquer la vis de fixation (6) avec le filet de fixation (20) de l'élément de base (8), **caractérisé en ce que**
l'élément de base (8) est constitué en tant qu'écrou à river aveugle qui est fixé, au moyen d'un bourrelet de rivet (16), sur le premier composant (2), et dont le filet de fixation (20) est disposé sur un côté du bord (16), et dont le filet de réglage (18) est disposé sur le côté axialement opposé du bourrelet de rivet (16).

2. Dispositif de compensation de tolérance selon la revendication 1, **caractérisé en ce que** le filet de réglage (18) de l'élément de base (8) est au total disposé sur le côté du premier composant (2) éloigné axialement du bourrelet de rivet (16).

3. Dispositif de compensation de tolérance selon la revendication 1, **caractérisé en ce que** le filet de réglage (18) de l'élément de base (8) est placé au moins partiellement à travers le plan du premier composant (2), et **en ce que** l'élément de base (8) a, dans la zone entre le filet de réglage (18) et le filet de fixation (20), une pente de dépouille (40) pour recevoir une partie saillante du filet (26) de la douille de réglage (10) vissée dans l'élément de base (8).

4. Dispositif de compensation de tolérance pour la compensation automatique de tolérances, dues à la fabrication et/ou au montage, de la distance entre un premier composant (2) et un deuxième composant, avec
une vis de fixation (6),
un élément de base (8) prévu sur le premier composant (2), avec un alésage fileté qui présente un filet de réglage (18) et un filet de fixation (20) de diamètres différents, et
une douille de réglage (10) avec un alésage débouchant (24) et un filet (26) prévu sur la circonférence extérieure,
le filet de réglage (18) de l'élément de base (8) et le filet (26) de la douille de réglage (10) formant un appariement fileté d'un sens de filet défini pour le réglage de la douille de réglage en vue de la compensation de tolérance, et le filet de fixation (20) de l'élément de base (8) et le filet (14) de la vis de fixation (6) formant un appariement fileté d'un sens de filet défini pour le serrage du dispositif de compensation de tolérance,
la douille de réglage (10) ayant un segment d'entraînement (28) qui forme avec la vis de fixation (6) un raccordement par friction qui, quand la vis de fixation (6) introduite à travers la douille de réglage (10) est mise en rotation, fait tourner solidairement la douille de réglage (10) et qui, quand la douille de réglage (10) s'est, après la compensation de tolérance, appuyée contre le deuxième composant et quand la vis de fixation continue à être mise en rotation, se desserre afin de pouvoir bloquer la vis de fixation (6) avec le filet de fixation (20) de l'élément de base (8), **caractérisé en ce que**
l'élément de base (8) est constitué du premier composant (2) lui-même, dans lequel le filet de réglage (18) et le filet de fixation (20) sont incorporés directement.

5. Dispositif de compensation de tolérance pour la compensation automatique de tolérances, dues à la fabrication et/ou au montage, de la distance entre un premier composant (2) et un deuxième composant, avec
une vis de fixation (6),
un élément de base (8) prévu sur le premier composant (2), avec un alésage fileté qui présente un filet de réglage (18) et un filet de fixation (20) de diamètres différents, et
une douille de réglage (10) avec un alésage débouchant (24) et un filet (26) prévu sur la circonférence extérieure,
le filet de réglage (18) de l'élément de base (8) et le filet (26) de la douille de réglage (10) formant un appariement fileté d'un sens de filet défini pour le réglage de la douille de réglage en vue de la compensation de tolérance, et le filet de fixation (20) de l'élément de base (8) et le filet (14) de la vis de fixation (6) formant un appariement fileté de sens de filet opposé pour le serrage du dispositif de compensation de tolérance,
la douille de réglage (10) ayant un segment d'entraînement (28) qui forme avec la vis de fixation (6) un raccordement par friction qui, quand la vis (6) introduite à travers la douille de réglage (10) est mise en rotation, fait tourner solidairement la douille de réglage (10) et
qui, quand la douille de réglage (10), après la compensation de tolérance, s'est appuyée contre le deuxième composant et quand la vis de fixation continue à être tournée, se desserre pour pouvoir bloquer la vis de fixation (6) avec le filet de fixation (20) de l'élément de base 8, **caractérisé en ce que**
l'élément de base (8) est constitué d'un insert (42), en forme de douille, qui est inséré dans le premier composant (2).

6. Dispositif de compensation de tolérance selon la revendication 5, **caractérisé en ce que** l'insert (42) en forme de douille a un filet extérieur (44) pour une mise en prise filetée avec le premier composant (2).

7. Dispositif de compensation de tolérance selon la revendication 5, **caractérisé en ce que** l'insert (42) en forme de douille a un contour extérieur profilé (46) pour être noyé dans le premier composant (2) réalisé en matière plastique.
